# EUROPÄISCHE PATENTSCHRIFT

(11) **EP 2 044 286 B1**
(45) Veröffentlichungstag und Bekanntmachung des Hinweises auf die Patenterteilung: **15.02.2012**
(21) Anmeldenummer: 07785977.5
(22) Anmeldetag: 10.07.2007
(51) Int. Cl.: E21B 7/30

(54) **VORRICHTUNG ZUM VERBINDEN EINES STRANGABSCHNITTES MIT EINEM ZUGELEMENT**
DEVICE FOR CONNECTING A SECTION OF A PIPE RUN TO A PULLING ELEMENT
DISPOSITIF POUR RELIER UNE SECTION DE BARRE Á UN ÉLÉMENT DE TRACTION

(30) Priorität: 24.07.2006 DE 202006011507 U
(43) Veröffentlichungstag der Anmeldung: 08.04.2009
(73) Patentinhaber: Tracto-Technik GmbH & Co.KG, 57368 Lennestadt (DE)
(72) Erfinder: KOCH, Elmar, 59889 Eslohe (DE)
(74) Vertreter: Tilmann, Max Wilhelm
(86) Internationale Anmeldenummer: PCT/EP2007/006115
(87) Internationale Veröffentlichungsnummer: WO 2008/011982

(56) Entgegenhaltungen:
- EP-A1- 0 694 675
- DE-A1- 10 161 648

## Beschreibung

Die Erfindung betrifft das Verbinden eines Strangabschnitts mit einem Zugelement, das den Strangabschnitt durchgreift, und das Verspannen von Strang-, insbesondere Rohrabschnitten zu einem Strang mit einem Zugelement, das zwischen einem Widerlager an einem vorderen Ende des Rohrstrangs und einem Adapter an dessen hinterem Ende verläuft.

Entsprechende Systeme werden vielfach bei der grabenlosen Rohrverlegung bzw. -erneuerung verwendet, beispielsweise, um den aus einzelnen Rohrabschnitten bestehenden Rohrstrang zu verspannen und mit einem vorauseilenden Bohr- oder Berstwerkzeug möglichst spielfrei zu verbinden.

Ein solches System ist beispielsweise aus der DE 196 08 056 C1 bekannt.

Dort wird ein Berstwerkzeug offenbart, welches durch eine zu ersetzende Altleitung gezogen wird. Während des Vortriebs des Berstwerkzeugs durch die Altleitung wird diese zerstört und gleichzeitig ein neuer Rohrstrang in das Erdreich eingezogen. Der neu einzuziehende Rohrstrang besteht aus einzelnen kurzen Rohrabschnitten.

Um die Reibung während des Einziehens zu verringern, weisen die Rohrabschnitte des neuen Rohrstrangs an der Außen- sowie Innenseite glatte Rohrmuffen auf. Diese Rohrmuffen sind jedoch nicht in der Lage, Zugkräfte zu übertragen, so daß für eine möglichst spielfreie Verbindung des Rohrstrangs mit dem Berstwerkzeug eine Spannvorrichtung vorgesehen ist.

Die Spannvorrichtung wirkt auf ein Seil oder eine Kette, die an dem Berstwerkzeug befestigt und durch das neu einzuziehende Rohr hindurchgeführt ist.

Im hinteren Ende des Rohrstrangs befindet sich die eigentliche Spannvorrichtung, die sich über einen Adapter an dem hinteren Ende des letzten Rohrabschnitts abstützt.

Das Spannen des Seils oder der Kette geschieht über Hydraulikzylinder, die, aufgrund der vielfach beengten Platzverhältnisse in den Arbeitsschächten, senkrecht zu dem Seil oder der Kette angeordnet sind. Dabei wird das Seil oder die Kette von einer mit einem Freilauf versehenen Umlenkrolle in die Längsrichtung der Hydraulikzylinder umgelenkt. Der Freilauf an der Umlenkrolle verhindert ein Zurückfedern des gespannten Seils bzw. der gespannten Kette, wenn für einen vollständigen Spannvorgang mehrere Zylinderhübe notwendig sind.

Die in der DE 196 08 056 C1 beschriebene Spannvorrichtung weist eine Reihe von Nachteilen auf.

Die durch die senkrechte Anordnung der Zylinder benötigte Umlenkung setzt voraus, daß flexible Ketten oder Seile als Zugmittel eingesetzt werden. Diese erfahren jedoch bei hohen Spannkräften eine deutliche Längendehnung, die von der Spannvorrichtung ausgeglichen werden muß. Dies ist Insbesondere daher nachteilig, weil die Spannvorrichtung für jedes Auffädeln eines neuen Rohrabschnitts gelöst werden muß, so daß das gedehnte Zugmittel bei jedem Spannzyklus entlastet und wieder belastet wird.

Ein weiterer Nachteil dieser beschriebenen Spannvorrichtung ist ihr großer Platzbedarf, den sie insbesondere innerhalb eines Reversierschachts einnimmt, von dem aus häufig Vorgänge zum Ersetzen alter Rohre gestartet werden.

Ein weiterer Nachteil von Spannvorrichtungen, die ein Seil oder eine Kette als Zugmittel verwenden, ist, daß das Seil oder die Kette in der Regel mindestens die Gesamtlänge des einzuziehenden Rohrstrangs aufweisen muß. Insbesondere zu Beginn des Rohrerneuerungsvorgangs müssen somit die Rohrabschnitte über eine lange Wegstrecke auf dem Zugmittel aufgefädelt werden.

Aus der DE 101 61 648 A1 ist eine Vorrichtung und ein Verfahren zum Bewegen von Rohrleitungen und insbesondere zum Ausziehen von Rohrleitungen aus dem Erdreich bekannt. Diese Vorrichtung umfasst eine Haltevorrichtung, die auf ein herkömmliches Bohrgerät aufgesetzt werden kann und mit diesem durch eine Rohrleitung verfahren werden kann. Die Haltevorrichtung dient dazu, in Abhängigkeit von der Bewegungsrichtung eine Verbindung des Bohrgeräts mit der Rohrleitung herzustellen. Hierzu weist diese ein Kopfteil auf, an dem mehrere klinkenförmige Halteelemente drehbar gelagert sind. Die Halteelemente sind mittels einer Feder vorgespannt. Ein mit dem Bohrgerät verbundenes Basisteil ist relativ zu dem Kopfteil verschiebbar, wobei eine Relativverschiebung zu einem Auslenken der Halteelemente führt, wodurch diese in Eingriff mit der Rohrleitung kommen.

In der DE 10 2004 033 566 B3, der als nächster Stand der Technik gitt, ist eine Vorrichtung zum Verspannen von Rohrabschnitten zu einem Rohrstrang mit einem Zugelement beschrieben, die zwischen einem Widerlager an dem vorderen Ende des Rohrstrangs und einem an dessen hinterem Ende angeordneten Adapter verläuft sowie einem linearen Spannantrieb zum Aufbringen der Spannkraft. Das System zeichnet sich durch die parallele Lage des linearen Spannantriebs in Bezug zu dem Rohrstrang aus, wobei sich eine Seite des linearen Spannantriebs an dem Adapter und die andere Seite über mindestens ein Halteelement an dem Zugelement abstützt

Dies erlaubt es, den linearen Spannantrieb zum Teil auch innerhalb des zu verlegenden Rohrstrangs anzuordnen und verringert den Platzbedarf der Spannvorrichtung.

Allerdings muß die Spannvorrichtung, um dem Rohrstrang einen neuen Rohrabschnitt hinzuzufügen, auf dem Zugelement verschoben bzw. von dem Zugelement gelöst werden. Dies geschieht bislang manuell.

Der Erfindung liegt nun die Aufgabe zugrunde, eine Vorrichtung zum Verbinden eines Strangabschnitts mit einem Zugelement, das den Strangabschnitt durchgreift, vorzuschlagen, die es beispielsweise erlaubt, bei der bekannten Spannvorrichtung ein leichtes Bewegen oder Abziehen der Spannvorrichtung auf bzw. von dem Zugelement zu ermöglichen.

Diese Aufgabe wird erfindungsgemäß durch den Gegenstand der nebengeordneten Ansprüche gelöst. Vorteilhafte Ausführungsformen sind in den Unteransprüchen beansprucht.

Die Erfindung geht von dem Grundgedanken aus, zumindest einen an einem Kipphebelträger gehaltenen Kipphebel als Adapter in der Verbindung mit dem Zugelement zu nutzen. Der Kipphebel kann in seiner Schwenklage relativ zum Kipphebelträger verändert werden, so daß ein am Kipphebel vorgesehener Stützabschnitt in verschiedene Lagen gebracht werden kann und so als auf verschiedene Querschnitte adaptierbarer Adapter genutzt werden kann. Ferner erlaubt es der Einsatz eines Kipphebels, die Verbindungsvorrichtung leicht durch den Strangabschnitt zu ziehen, wenn der Kipphebel in eine rückgezogene Position geschwenkt wird.

Kipphebelträger und Kipphebel sind derart ausgestaltet, daß der Kipphebel derart mit dem Kipphebelträger verbunden ist, daß der Kipphebel um einen Kipppunkt kippen kann, und dabei ein zur Abstützung an dem Strangabschnitt ausgebildeter Stützabschnitt des Kipphebels von einer rückgezogenen Position in eine aufgestellte Position bewegt werden kann, wobei die rückgezogene Position relativ zur aufgestellten Position näher an der Mittelachse der Vorrichtung vorgesehen ist.

Durch die Kipphebel stellt die erfindungsgemäße Vorrichtung eine Schubkräfte oder Zugkräfte übertragende Verbindung zu dem Strangabschnitt her. Über eine ebenfalls an der erfindungsgemäßen Vorrichtung vorgesehene Verbindung zum Verbinden des Kipphebelträgers mit dem Zugelement wird (auf der anderen Seite) die Verbindung mit dem Zugelement hergestellt, so daß die erfindungsgemäße Vorrichtung den Strangabschnitt in einer kräfteübertragenden Weise mit dem Zugelement verbinden kann.

Der Kipphebelträger ist erfindungsgemäß ringförmig ausgebildet. Die erfindungsgemäße Vorrichtung wird insbesondere bevorzugt bei Strangabschnitten mit ringförmigen oder elliptischen Innendurchmessern eingesetzt. Hierfür hat sich eine ringförmige Ausbildung des Kipphebelträgers zum gleichmäßigen Einbringen der Kräfte über den Strangabschnittquerschnitt als besonders geeignet herausgestellt.

In einer bevorzugten Ausführungsform ist der Stützabschnitt des Kipphebels an einem Ende des Kipphebels ausgebildet. Zwar ist es beispielsweise auch denkbar, den Stützabschnitt bei einem Kipphebel mit einem geknickten Umfangsverlauf in der Nähe des Knickpunkts auszubilden, beispielsweise als kraftschlüssige Verbindung. Besonders gut werden die Kräfte jedoch übertragen, wenn der Stützabschnitt am Ende des Kipphebels angeordnet ist und beispielsweise formschlüssig mit der Innenseite einer Muffe am Ende des Strangabschnitts zusammenwirkt.

Insbesondere bevorzugt ist der Stützabschnitt senkrecht zur Kippebene, in der der Kipphebel beweglich ist, weisend ausgebildet. Es hat sich als vorteilhaft erwiesen, wenn die die Kräfte übertragende Berührungsfläche des Kipphebels mit dem Strangabschnitt besonders groß ist. Dies wird beispielsweise durch einen senkrecht zur Kippebene ausgebildeten Stützabschnitt erreicht.

In einer besonders bevorzugten Ausführungsform sind mehrere Kipphebel vorgesehen. Dadurch ist beispielsweise eine Anordnung möglich, bei der die Schubkräfte symmetrisch in den Strangabschnitt eingebracht werden können.

Insbesondere bevorzugt sind die Stützflächen dieser Kipphebel senkrecht zur Kippebene ausgebildet und bilden zusammen eine zumindest nahezu vollständige Ringfläche. Diese Ringfläche wird idealerweise lediglich durch dünne Spalte zwischen den einzelnen, nebeneinander ringförmig angeordneten Stützflächen unterbrochen.

In einer bevorzugten Ausführungsform wird der Kipphebel durch elastische Mittel in Richtung auf die aufgestellte Position vorgespannt. Es ist bevorzugt, daß der Kipphebel von innen an einem Vorsprung, bzw. einem Absatz des Strangabschnitts angreift. Dieser Eingriff mit dem Strangabschnitt wird beim Einsetzen der erfindungsgemäßen Vorrichtung rascher und ohne besondere Einstell-, bzw. Montierschritte erreicht, wenn der Kipphebel in Richtung auf eine aufgestellte Position vorgespannt ist.

Eine besonders gute Vorspannung in Richtung auf eine aufgestellte Position wird bei mehreren Kipphebeln, die jeweils einen dem jeweiligen Stützabschnitt im Bezug auf den jeweiligen Kipppunkt gegenüberliegenden Abschnitt aufweisen, erreicht, wenn ein O-Ring an diesen Abschnitten anliegt. Der O-Ring zieht diese (vorzugweise endseitigen) Abschnitte zusammen und spannt damit die gegenüberliegenden Stützabschnitte in eine aufgestellte Position vor.

In einer bevorzugten Ausführungsform ist ein Anschlag vorgesehen, der die Bewegung des Kipphebels von der rückgezogenen Position fort durch Kontakt eines Teils des Kipphebels mit dem Anschlag auf eine maximale aufgestellte Position beschränkt. Eine solche Limitierung der Kippbewegung des Kipphebels erlaubt es, die erfindungsgemäße Vorrichtung besser zu handhaben und verhindert, daß der Kipphebel sich über einen festgelegten Punkt hinaus dreht und so ggf. umschlägt.

In einer bevorzugten Ausführungsform ist ein Spannantrieb vorgesehen, über den der Kipphebelträger mit dem Zugelement verbunden werden kann, wobei das eine Ende des Spannantriebs mit dem Kippttebelträger verbunden ist und das andere Ende des Spannantriebs mit dem Zugelement verbunden werden kann. Zwar ist es ebenfalls möglich, den Kipphebelträger unmittelbar, beispielsweise über eine Hülse und einen in die Hülse und das Zugelement eingreifenden Bolzen mit dem Zugelement zu verbinden. Für das besonders bevorzugte Einsatzgebiet der Verbindung von Strangabschnitten und dem erfindungsgemäß vorgeschlagenen Verfahren hat es sich jedoch als besonders zwecksmäßig erwiesen, wenn der Abstand zwischen dem Kipphebel und dem Verbindungspunkt (Halteelement) mit dem Zugelement veränderbar und zwar durch einen Spannantrieb aktiv veränderbar ist.

Eine erfindungsgemäße Spannvorrichtung weist die zuvor beschriebene, erfindungsgemäße Verbindungsvorrichtung mit einer Gleitbremse auf, die selbsthemmend in eine Richtung an dem Zugelement angreift. Die Selbsthemmung, die zu einem Fixieren der Gleitbremse auf dem Zugelement führt, ist in dieser Funktionsstellung nur in einer Richtung wirksam und wird durch die Spannkraft des Spannantriebs (vorzugsweise bei der Kontraktion des Spannantriebs) ausgelöst und aufrechterhalten, um ein selbsttätiges Bewegen des Spannantriebs bzw. der Spannvorrichtung in dieser Richtung auf dem Zugelement zu ermöglichen. Mit Hilfe der Gleitbremse kann sich der Spannantrieb bzw. die Spannvorrichtung beispielsweise aus dem jeweiligen Rohrabschnitt herausziehen. Dies erübrigt ein manuelles Herausziehen des Spannantriebs bzw. der Spannvorrichtung. Für das Auffädeln der Spannvorrichtung auf das Zugelement kann die Gleitbremse in eine Freilaufstellung geschaltet werden.

Unter "Gleitbremse" ist insbesondere jedwede geometrische Ausgestaltung eines auf dem oder an dem Zugelement bei Bedarf verschiebbaren Fixierungsmittels zu verstehen, wie es beispielsweise als Gleithülse oder auch ein als Gleitschuh, d.h. ohne Ringschluß ausgestaltetes Fixierungsmittel darstellen kann.

Die erfindungsgemäße Gleitbremse kann beispielsweise rohrförmig ausgebildet sein und einen Klemmring aufweisen, durch den das Zugelement hindurchläuft. Der Klemmring kann in der Gleitbremse so angeordnet sein, daß er über einen Betätigungshebel in eine solche Schrägstellung in Bezug auf das Zugelement gebracht werden kann, daß eine selbsthemmende Arretierung auf dem Zugelement eintritt, sobald die Gleitbremse in einer Richtung auf dem Zugelement bewegt wird. Beim Lösen des Betättgungshebels ist die Gleitbremse dann wieder frei auf dem Zugelement verschiebbar.

Unter linearem Spannantrieb wird insbesondere eine Antriebsvorrichtung verstanden, die eine Relativbewegung von zwei mit ihr verbundenen Anlenkpunkten entlang einer Wirkungslinie erzeugen kann. Insbesondere kommen hier hydraulisch oder pneumatisch betriebene Zylinder in Frage, wobei sich der Zylindermantel relativ und linear zu der Kolbenstange bewegt. Ein weiteres Beispiel für einen derartigen Linearantrieb ist die Kombination aus Rotationsmotor und Zahnstange. Hierbei befindet sich ein Anlenkpunkt für die Kraftabstützung an dem Rotationsmotor und der andere an der Zahnstange. Ebenfalls ist die Verwendung einer Gewindestange für einen linearen Spannantrieb möglich.

Die erfindungsgemäße Lösung ist nicht auf das Spannen von in ihrem Umfang geschlossenen Rohrabschnitten beschränkt. Vielmehr können sämtliche Elemente gespannt werden, die hintereinanderliegend einen Strang bilden, durch den oder an dem ein Zugelement gerührt werden kann.

Das Abstützen des linearen Spannantriebs an dem Adapter bzw. dem Zugelement (über das/die Halteelemente) kann direkt oder indirekt über weitere dazwischenliegende Elemente erfolgen.

Der Begriff "Hülse" wird im Sinne der Erfindung insbesondere so verstanden, daß dieser sämtliche Elemente umfaßt, die es ermöglichen, mit dem Zugelement verbunden zu werden und dadurch Kräfte, zumindest in eine Längsrichtung des Zugelements sowie quer dazu, zu übertragen. Insbesondere kann die Hülse im Sinne der Erfindung auch einen quadratischen, V-förmigen oder U-förmigen Querschnitt aufweisen.

Besonders vorteilhaft läßt sich die erfindungsgemäße Vorrichtung verwenden, um einen Strang aus einzelnen Rohrabschnitten an einer Einzugsvorrichtung zu spannen, die für das grabenlose Einziehen von Rohren konzipiert ist. Insbesondere sind hierunter statisch und/oder dynamisch vorgetriebene Aufweit-, Berst- oder Bohrgeräte zu verstehen, die selbst- oder fremdgetrieben ausgeführt sein können.

Die erfindungsgemäße Vorrichtung zum Spannen kann jedoch mit jeglicher Art Widerlager verwendet werden, das es erlaubt, ein Zugelement zu fixieren und das vordere Ende des Rohrstrangs abzustützen.

In einer bevorzugten Ausführungsform der Erfindung ist das Zugelement in Form eines Gestängestrangs, der aus einzelnen Gestängeschüssen zusammengesetzt wird, ausgeführt. Dies ermöglicht, die Länge des Zugelements während des Einziehvorgangs des Neurohrs, dessen Länge sich durch Hinzufügen einzelner Rohrabschnitte kontinuierlich vergrößert, anzupassen. Das Auffädeln neuer Rohrabschnitte auf das freie Ende des Zugelements ist somit mit deutlich weniger Aufwand durchzuführen.

Weiterhin bietet die Verwendung eines Gestängestrangs den Vorteil, daß bei entsprechender Formgebung und Materialwahl die Dehnung des Gestänges so gering gehalten werden, daß sie keine spürbare Auswirkung auf den Spannvorgang hat.

Ein weiterer Vorteil bei der Verwendung eines Gestängestrangs als Zugelement ist, daß in diesen auf einfache Weise konstruktive Merkmale integriert werden können, die eine formschlüssige Verbindung mit Elementen der Spannvorrichtung gewährleisten. Auch ist eine kraftschlüssige Verbindung mit einem biegesteifen Gestängestrang vorteilhaft möglich. Besonders vorteilhaft ist es, wenn die Gestängeschüsse, die das Zugelement bilden, eine oder mehrere Öffnungen oder Erhebungen aufweisen, die zu einer formschlüssigen Verbindung mit dem Halteelement des Spannantriebs oder der Hülse dienen.

Unter "Offnungen" oder "Erhebungen" sollen insbesondere sämtliche konstruktive Merkmale fallen, die ein formschlüssiges Verbinden gewährleisten. Insbesondere sind hier Durchbrechungen oder Sacklochbohrungen innerhalb der Gestängeelemente zu nennen. Weiterhin können Nuten in beliebiger Form vorhanden sein. Unter Erhebungen fallen insbesondere sämtliche Vorsprünge, die durch Anliegen an einer Kante der Hülse zu der formschlüssigen Verbindung führen.

Besonders vorteilhaft sind die Öffnungen oder Erhebungen in regelmäßigen Abständen auf den Gestängeschüssen angeordnet.

In einer vorteilhaften Ausführungsform der vorliegenden Erfindung weist der Spannantrieb einen oder mehrere pneumatisch oder hydraulisch angetriebene Zylinder auf, wobei sich das erste Ende der/des Zylinder(s) - beispielsweise der Zylindermantel - an dem Adapter abstützt und das zweite Ende - im vorliegenden Beispiel die Kolbenstange - sich über das Halteelement form- und/oder kraftschlüssig an dem Zugelement oder der Hülse abstützt.

Der oder die Antriebszylinder können ringförmig gebaut sein, wobei Zylindermantel und/oder Zylinderkolben eine längsaxiale Öffnung aufweisen können, durch die das Zugelement und andere Elemente der Spannvorrichtung geführt werden können.

In einer vorteilhaften Ausführung weist die Spannvorrichtung einen Abschnitt auf, dessen Außendurchmesser dem Innendurchmesser der Rohrabschnitte angepaßt ist oder werden kann. Dadurch können das Zugelement sowie die Spannvorrichtung innerhalb des Rohrstrangs zentriert werden. Das Anpassen des Durchmessers dieses Abschnitts kann beispielsweise durch das Aufsetzen verschiedener Adapter erfolgen. Vorteilhaft ist es, den angepaßten Durchmesser, bezogen auf den Rohradapter, auf der einen Seite und die Halteelemente auf der entsprechend gegenüberliegenden Seite anzuordnen.

Das efindungsgemäße Verfahren zum Verspannen von Strangabschnitten (1) zu einem Strang umfaßt folgende Schritte:
- Befestigen eines Zugelements an einem Widerlager, das an einem vorderen Ende des Strangs angeordnet ist;
- Auffädeln eines oder mehrerer Strangabschnitte (1) auf das Zugelement;
- Ansetzen einer Vorrichtung zum Verbinden eines Strangabschnitts mit einem Zugelement, die einen Kipphebelträger, mindestens einen Kipphebel, der derart mit dem Kipphebelträger verbunden ist, daß der Kipphebel um einen Kipppunkt kippen kann, und dabei ein zur Abstützung an dem Strangabschnitt ausgebildeter Stützabschnitt des Kipphebels von einer rückgezogenen Position in eine aufgestellte Position bewegt werden kann, wobei die rückgezogene Position relativ zur aufgestellten Position näher an der Mittelachse der Vorrichtung vorgesehen ist und einem Spannantrieb, so daß sich der Kipphebel mit seinem Stützabschnitt an dem hinteren Ende des letzten Strangabschnitts abstützt und sich der Spannanhieb über ein Halteelement an dem Zugelement abstützt:
- Aktivieren des Spannantriebs, wodurch der Kipphebelträger und der Kipphebel relativ zu dem Halteelement (6) bewegt wird:
- Aktivieren der Gleitbremse (20) und Herausfahren der Spannvorrichtung aus dem Strang.

Bei der vorteilhaften Verwendung von Spannzylindern für die Spannvorrichtung mit einem kurzen Hub können für einen Spannvorgang für den Rohrstrang mehrere Spannzyklen des Spannantriebs vorgesehen sein.

So kann zum Einleiten der Verspannkraft die erfindungsgemäße Verspannvorrichtung an der dem Widerlager gegenüberliegenden Ende des letzten Strangabschnitts an den Strang angesetzt werden, wobei die Kipphebel in eine endseitige Innenseite einer Muffe eingreifen können und der die Verbindung zum Zugelement herstellende Spannantriebe über eine Hülse und einen zugehörigen Bolzen mit einer Ausnehmung des Zugelements verbunden werden kann. Durch Spannen des Spannantriebs, also durch Auseinanderbewegen der Kipphebel und des Verbindungspunkts am Zugelement werden Schubkräfte auf den Strangabschnitt übertragen und der Strangabschnitt in Richtung auf das Widerlager bewegt bzw. vorgespannt.

Diese Bewegung erlaubt es, das jeweilige eine Ende eines Strangabschnitts in die Muffe eines benachbarten Strangabschnitts einzuschieben. Die Vorspannung hält die ineinandergeschobenen Strangabschnitte zusammen, wenn der Strang durch ein weiteres Zugmittel, das von außen an dem Widerlager, beispielsweise an einem Aufweitkopf, angreift, weiter in das Erdreich eingezogen wird. So kann der hinter dem Widerlager angeordnete Strang sicher In das Erdreich eingezogen werden, ohne daß die Strangabschnitte auseinandergezogen werden.

Soll nach dem ersten Einziehen der Strang verlängert werden, so kann ein neuer Strangabschnitt an den dem Widerlager gegenüberliegenden letzten Strangabschnitt angesetzt werden und - soweit das Zugmittel als Gestänge ausgeführt ist - ein weiterer Gestängeabschnitt an das Ende des Zugmittels angesetzt werden. Anschließend kann der Verriegelungsbolzen aus der Hülse genommen werden. Der Spannantrieb kann weiter ausgefahren werden, wobei sich die Verbindungsvorrichtung nach wie vor über die Kipphebel an dem Ende des (nun vorletzten) Strangabschnitts abstützt, so daß das den Kipphebeln gegenüberliegende Ende des Spannabschnitts von den Kipphebeln fortbewegt wird. Hierbei schiebt sich die Gleitbremse über das Gestänge. Nach dem kompletten Ausfahren des Spannantriebs wird der Antrieb umgeschaltet und wieder eingefahren. Nun klemmt die Gleitbremse auf dem Gestänge und verhindert eine Rückbewegung des den Kipphebeln gegenüberliegenden Endes des Spannantriebs. Demnach bewirkt das Zusammenziehen des Spannantriebs, daß die Kipphebel auf die Gleitbremse hin gezogen werden. Dabei passen sie sich an den Innendurchmesser des neuen Strangabschnitts an und kippen gegebenenfalls in eine weiter zurückgezogene Position.

Während dieses Einziehens des Spannantriebs und der Kipphebel in den neuen Strangabschnitt werden die Kipphebel durch den umlaufenden O-Ring ständig auf Spannung gehalten. Erreichen die Kipphebel nun die nächste Muffe, so kippen sie in eine weiter aufgerichtete Position in dieser Muffe. Nun kann der Spannantrieb mit dem Verriegelungsbolzen und der Spannhülse erneut mit dem Zugelement verbunden werden und das Spannen der Strangabschnitte erneut durchgeführt werden.

In einer bevorzugten Ausführungsform werden der Kipphebelträger und die Kipphebel in Schubrichtung so angeordnet, daß der Kipphebelträger vor den Kipphebeln liegt, die Kipphebel also von dem außenliegenden Kipphebelträger von außen an einen Vorsprung des Strangabschnitts herangeführt werden. Dies führt zu einem besonders sicheren Einbringen der Schubkräfte. Werden die Kipphebel von einem innenliegenden Kipphebelträger von innen an den Vorsprung geführt, so besteht die Gefahr, daß beim Übertragen der dann zu übertragenden Zugkräfte die Kipphebel nach innen gedrückt werden und ihre Verbindung mit dem Strangabschnitt verlieren. Diese Anordnung wird im Rahmen der Erfindung zwar ebenfalls vorgeschlagen, die Schubkräfte übertragende Lösung jedoch besonders bevorzugt.

Die Erfindung wird nachfolgend anhand eines in den Zeichnungen dargestellten Ausführungsbeispiels näher erläutert.

In den Zeichnungen zeigen:
- Fig. 1: den Kipphebelträger und die Kipphebel einer Ausführungsform der erfindungsgemäßen Vorrichtung in einer perspektivischen Draufsicht:
- Fig. 2: den Kipphebelträger und die Kipphebel gemäß Fig. 1 in einer Seitenansicht:
- Fig. 3: die erfindungsgemäße Spannvorrichtung in einer ersten Position in einem Strang, dargestellt in einer perspektivischen Ansicht,
- Fig. 4: die Spannvorrichtung gemäß Fig. 3 in einer zweiten Position, dargestellt in einer perspektivischen Ansicht aus einem anderen Blickwinkel,

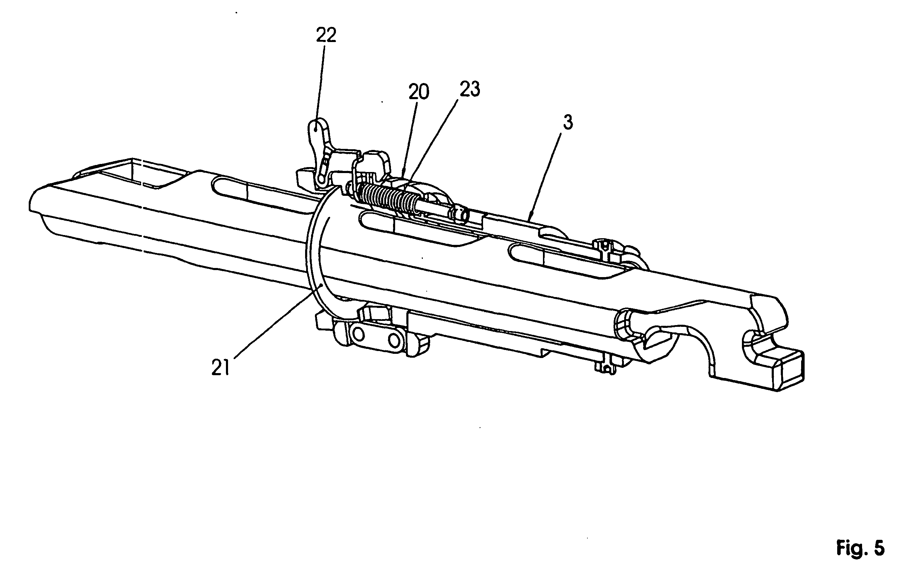

- Fig. 5: eine bevorzugte Ausführung der erfindungsgemäßen Gleitbremse und

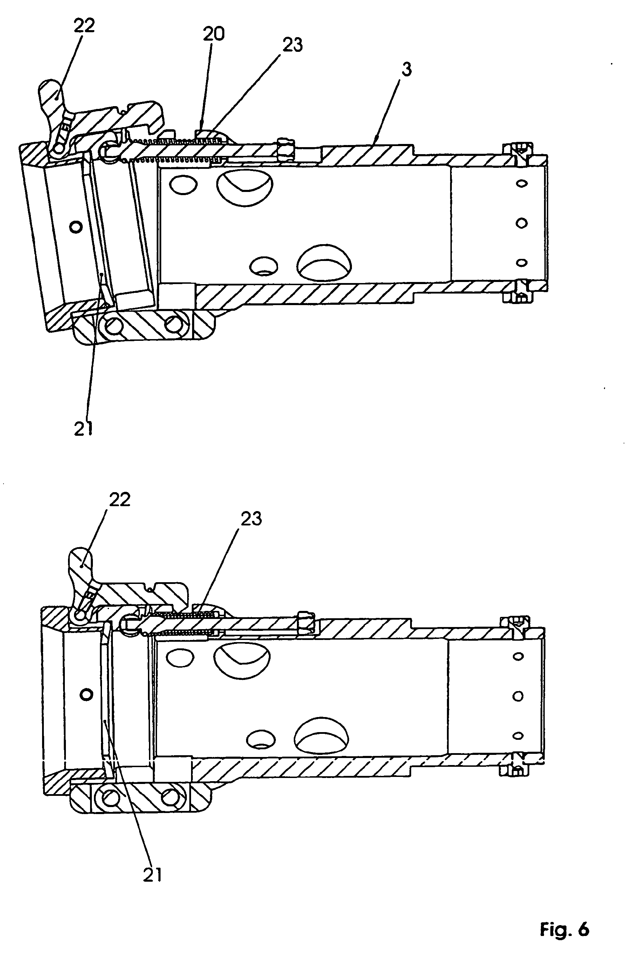

- Fig. 6: die Gleitbremse der Fig. 6 in Funktionsstellung.

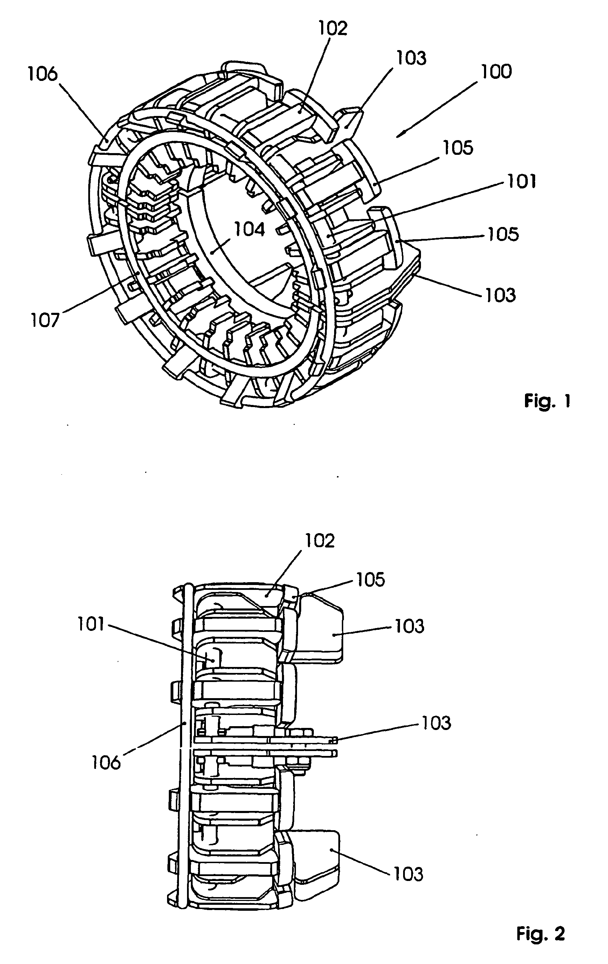

Der in Fig. 1, Fig. 2 dargestellte Kipphebelträger 100 ist ringförmig ausgebildet. An einem Ring 101 sind Kipphebel 102 kippbar angeordnet. Ferner sind auf dem Ring 101 Leitelemente 103 abgestützt. Ein innerer Ring 104 erlaubt die Verbindung des Kipphebelträgers 100 mit Mitteln zum Verbinden des Kipphebelträgers 100 mit einem durch den Ring 104 durchgeführten Zugelement.

Die Kipphebel 102 weisen an einem ersten Ende Stützabschnitte 105 auf, die senkrecht zur Kippebene, in der der Kipphebel beweglich ist, weisen. Am gegenüberüegenden Ende weisen die Kipphebel 102 eine Aufnahme auf, in der ein O-Ring 106 anliegt und die Kipphebel in Richtung auf die aufgestellte Position vorspannt. Ein Anschlagring 107 begrenzt die maximal aufgestellte Position der Kipphebel 102.

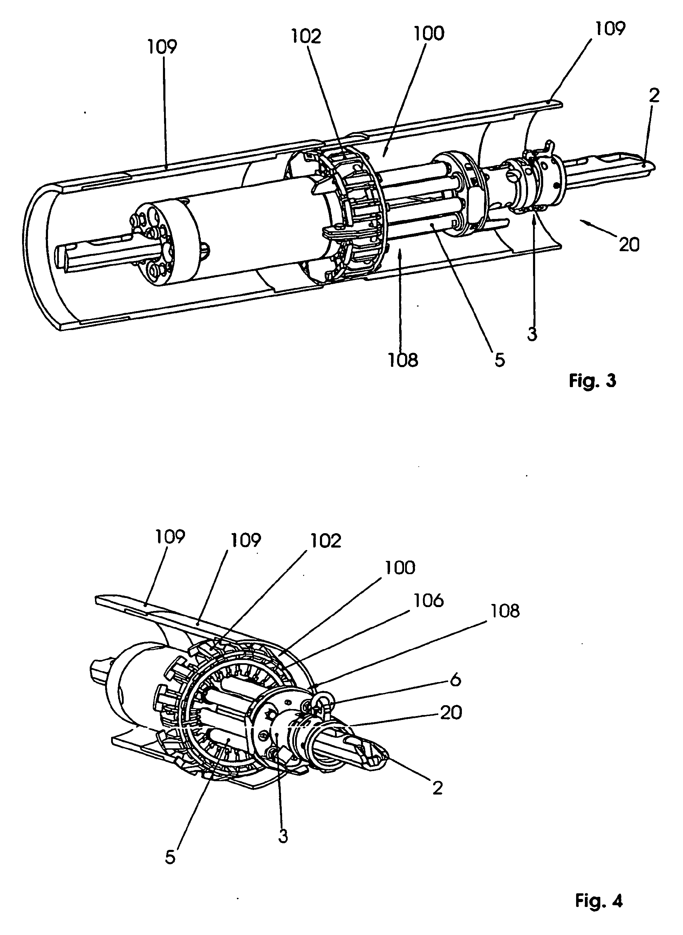

Fig. 3, Fig. 4 zeigen die aus den Kipphebeln 102, dem Kipphebelträger 100 und der die Verbindung zu dem Zugelement (Zuggestänge 2) bildenden Spannvorrichtung 108 mit Gleitbremse 20 und Sperrhülse bestehende erfindungsgemäße Vorrichtung zum Vierbinden eines Strangabschnitts 109 mit einem Zugelement (Zuggestänge 2), bzw. die erfindungsgemäße Spannvorrichtung.

Fig. 3 zeigt die erfindungsgemäße Vorrichtung in einer Position, in der nach dem ersten Einziehen der Strang verlängert werden soll. Ein neuer Strangabschnitt 109 wurde an den dem Widerlager gegenüberliegenden letzten Strangabschnitt 109 angesetzt und ein weiterer Gestängeabschnitt an das Ende des Zugmittels angesetzt. Der Verriegelungsbolzen 6 wurde aus der Hülse 3 genommen. Der Spannantrieb 108 wurde weiter ausgefahren, wobei sich die Verbindungsvorrichtung nach wie vor über die Kipphebel 102 an dem Ende des (nun vorletzten) Strangabschnitts 109 abgestützt hatte, so daß das den Kipphebeln 102 gegenüberliegende Ende des Spannantriebs von den Kipphebeln 102 fortbewegt wurde. Hierbei schob sich die Gleitbremse 20 über das Gestänge 2. Nach komplettem Ausfahren des Spannantriebs 108 ist nun der Antrieb umgeschaltet worden und wird wieder eingefahren. Nun klemmt die Gleitbremse 20 auf dem Gestänge 2 und verhindert eine Rückbewegung des den Kipphebeln 102 gegenüberliegenden Endes des Spannantriebs 108. Demnach bewirkt das Zusammenziehen des Spannantriebs 108, daß die Kipphebel 102 auf die Gleitbremse hin gezogen werden. Dabei passen sie sich (wie in Fig. 3 dargestellt) an den Innendurchmesser des neuen Strangabschnitts 109 an und kippen in eine weiter zurückgezogene Position.

Während dieses Einziehens des Spannantriebs 108 und der Kipphebel 102 in den neuen Strangabschnitt werden die Kipphebel 102 durch den umlaufenden O-Ring 106 ständig auf Spannung gehalten. Erreichen die Kipphebel 102 nun - wie in Fig. 4 dargestellt - die nächste Muffe, so kippen sie in eine weiter aufgerichtete Position in dieser Muffe. Nun kann der Spannantrieb 102 mit dem Verriegelungsbolzen 6 und der Spannhülse 3 erneut mit dem Zugelement 2 verbunden werden und das Spannen der Strangabschnitte 109 erneut durchgeführt werden. Das Spannen führt unter anderem dazu, daß das letzte Rohr in die Muffe des vorletzten Rohres eingeschoben wird, wie der Vergleich von Fig. 3 und Fig. 4 zeigt.

Die Spannvorrichtung dient dazu, einzelne Rohrabschnitte 109, die auf einem Zuggestänge 2 aufgefädelt sind, an einer Einzugsvorrichtung für Rohre (nicht dargestellt) zu verspannen, wobei die erfindungsgemäße Gleitbremse 20 es erlaubt, daß sich die Spannvorrichtung eigenständig aus dem verspannten Rohrabschnitt 109 herausbewegt.

Die Spannvorrichtung besteht im wesentlichen aus einer Sperrhülse 3 mit einer vorgelagerten Gleitbremse 20 sowie aus einer dazu relativ beweglichen Einheit mit einem Adapter sowie mehreren Hydraulikzylindern 5.

Die Gleitbremse 20 weist einen rohrförmigen Aufbau mit einem innengelagerten Klemmring 21 auf. Das Zugelement 2 durchragt die Gleitbremse und den Klemmring 21. Mit einem Betätigungshebel 22 läßt sich der Klemmring 21 entriegeln, so daß er mittels einer Feder 23 verkippt wird. Das Verkippen des Klemmrings 21 bewirkt, daß der Klemmring bei einer Zugkraft, wie sie von dem Spannantrieb 108 der Spannvorrichtung ausgeht, auf dem Zugelement 2 verkeilt, während eine von dem Spannantrieb 108 ausgehende Schubkraft die Gleitbremse 20 auf dem Zugelement 2 verschiebt. Hierdurch kann sich die Spannvorrichtung schrittweise aus dem Rohrstrang herausziehen.

## Patentansprüche

1. Vorrichtung zum Verbinden eines Strangabschnitts mit einem Zugelement, das den Strangabschnitt durchgreift, **gekennzeichnet durch**
- einen ringförmig ausgebildeten Kipphebelträger (100),
- mindestens einen kipphebel (102), der derart mit dem Kipphebelträger (100) verbunden ist, daß der Kipphebel (102) um einen Kipppunkt kippen kann, und dabei ein zur Abstützung an dem Strangabschnitt ausgebildeter Stützabschnitt (105) des Kipphebels (102) von einer rückgezogenen Position in eine aufgestellte Position bewegt werden kann, wobei die rückgezogene Position relativ zur aufgestellten Position näher an der Mittelachse der Vorrichtung vorgesehen ist und
- einer Verbindung zum Verbinden des Kipphebelträgers (100) mit dem Zugelement.

2. Vorrichtung nach Anspruch 1, **dadurch gekennzeichnet, daß** der Stützabschnitt (105) des Kipphebels (102) an einem Ende des Kipphebels (102) ausgebildet ist und eine senkrecht zur Kippebene, in der der Kipphebel (102) beweglich ist, weisende Stützfläche aufweist.

3. Vorrichtung nach Anspruch 2, dadurch gekennzeichet, daß mehrere Kipphebel (102) vorgesehen sind und die Stützflächen dieser Kipphebel zusammen eine zumindest nahezu vollständige Ringfläche bilden.

4. Vorrichtung nach einem der Ansprüche 1 bis 3. **dadurch gekennzeichnet, daß** der Kipphebel (102) durch elastische Mittel in Richtung auf die aufgestellte Position vorgespannt wird.

5. Vorrichtung nach einem der Ansprüche 1 bis 4, **gekennzeichnet durch** einen Anschlag (107), der die Bewegung des Kipphebels (102) von der rückgezogenen Position fort **durch** Kontakt eines Teils des Kipphebels (102) mit dem Anschlag (107) auf eine maximale aufgestellte Position beschränkt.

6. Vorrichtung nach einem der Ansprüche 1 bis 5, **gekennzeichnet durch** einen Spannantrieb (108), über den der kipphebelträger (100) mit dem Zugelement verbunden werden kann, wobei das eine Ende des Spannantriebs (109) mit dem Kipphebelträger (100) verbunden ist und das andere Ende des Spannantriebs (108) mit dem Zugelement verbunden werden kann.

7. Spannvorrichtung zum Verspannen von Strangabschnitten (1) zu einem Strang mit elnem Zugelement, das zwischen einem Widerlager und einem Adapter am hinteren Ende des Strangs verläuft, sowie einem in Bezug auf den Rohrstang parallel angeordneten linearen Spannantrieb zum Aufbringen einer Spannkraft, **gekennzeichnet durch** eine Gleitbremse (20), welche in Funktionsstellung selbsthemmend lediglich auf Zugbelastung **durch** den Spannantrieb (24, 108) an dem Zugelement (2) angreift, um ein selbsttätiges Bewegen der Spannvorrichtung in einer Richtung auf dem Zugelement zu ermöglichen, wobei der Adapter durch eine Vorrichtung zum Verbinden eines Strangabschnitts mit dem Zugelement nach einem der Ansprüche 1 bis 6 gebildet ist.

8. Spannvorrichtung nach Anspruch 7, **dadurch gekennzeichnet, daß** sich der lineare Spannantrieb (24, 108) zwischen dem Kipphebelhalter und einer auf dem Zugelement temporär fest angeordneten Sperrhülse (3) abstützt.

9. Spannvorrichtung nach Anspruch 7 oder 8, **gekennzeichnet durch** ein Widerlager in Form einer Bohr-, Berst- oder Aufweitvorrichtung zum Einziehen von Rohren.

10. Spannvorrichtung nach einem der Ansprüche 7 bis 9, **dadurch gekennzeichnet, daß** Gestängeelemente (2) eine oder mehrere Öffnungen oder Erhebungen zur formschlüssigen Verbindung mit der Sperrhülse (3) des linearen Spannantriebs aufweisen.

11. Spannvorrichtung nach einem der Ansprüche 7 bis 10, **dadurch gekennzeichnet, daß** der lineare Spannantrieb (24) einen oder mehrere pneumatisch oder hydraulisch angetriebene Zylinder (5) aufweist.

12. Spannvorrichtung nach einem der Ansprüche 7 bis 11, **dadurch gekennzeichnet, daß** die Gleitbremse (20) einen Klemmring (21) aufweist, der durch seine Wnkellage eine Sperrwirkung ausübt.

13. Spannvorrichtung nach einem der Ansprüche 7 bis 12, **dadurch gekennzeichnet, daß** die Gleitbremse (20) einen entriegelbaren Betätigungshebel aufweist, der nach dem Entriegeln eine Bewegung der Gleitbremse auf dem Zugelement (2) in Richtung aus dem Rohr (1) zuläßt und in der entgegengesetzten Richtung selbsttätig sperrt.

14. Spannvorrichtung nach einem der Ansprüche 7 bis 13, **dadurch gekennzeichnet, daß** die Sperrwirkung des Klemmrings (21) durch Verändern der Winkellage deaktiviert werden kann.

15. Verfahren zum Verspannen von Strangabschnitten (1) zu einem Strang mit folgenden Schritten:
- Befestigen eines Zugelements an einem Widerlager, das an einem vorderen Ende des Strangs angeordnet ist:
- Auffädeln eines oder mehrerer der Strangabschnitte (1) auf dem Zugelement; und **gekennzeichnet durch**
- Ansetzen einer Vorrichtung zum Verbinden eines Strangabschnitts mit einem Zugelement, die einen Kipphebelträger, mindestens einen Kipphebel, der derart mit dem Kipphebelträger verbunden ist, daß der Kipphebel um einen Kipppunkt kippen kann, und dabei ein zur Abstützung an dem Strangabschnitt ausgebildeter Stützabschnitt des Kipphebels von einer rückgezogenen Position in eine aufgestellte Position bewegt werden kann, wobei die rückgezogene Position relativ zur aufgestellten Position näher an der Mittelachse der Vorrichtung vorgesehen ist und einen Spannantrieb aufweist, so daß sich der Kipphebel mit seinem Stützabschnitt an dem hinteren Ende des letzten Strangabschnitts abstützt und sich der Spannantrieb über ein Halteelement an dem Zugelement abstützt;
- Aktivieren des Spannantriebs, wodurch der Kipphebelträger und der Kipphebel relativ zu dem Halteelement (6) bewegt wird;
- Aktivieren der Gleitbremse (20) und Herausfahren der Spannvorrichtung aus dem Strang.

## Claims

1. Device for connecting a string section with a pulling element, extending through the string section, **characterised by**
- a circular-shaped tilt lever support (100),
- at least one tilt lever (102), which is connected to the tilt lever support (100) so that the tilt lever (102) can pivot about a pivot point, and a support section (105) of the tilt lever (102), which support section is designed to support the tilt lever on the string section, is movable from a retracted position to an extended position, wherein the retracted position is provided closer to the centre axis of the device relative to the extended position and
- a connection for connecting the tilt lever support (100) with the pulling element.

2. Device according to claim 1, **characterised in that** the support section (105) of the tilt lever (102) is formed on an end of the tilt lever (102) and comprises a support surface oriented perpendicular to the tilt plane, in which the tilt lever (102) is movable.

3. Device according to claim 2, **characterised in that** a plurality of tilt levers (102) are provided and the support surfaces of these tilt levers form in combination an at least almost complete ring-shaped surface.

4. Device according to any one of claims 1 to 3, **characterised in that** the tilt lever (102) is pre-loaded by elastic means toward the extended position.

5. Device according to any one of claims 1 to 4, **characterised by** a limit stop (107), which limits movement of the tilt lever (102) from the retracted position to a maximum extended position through contact of a part of the tilt lever (102) with the stop (107).

6. Device according to any one of claims 1 to 5, **characterised by** a tensioning drive (108), via which the tilt lever support (100) can be connected with the pulling element, wherein the one end of the tensioning drive (108) is connected with the tilt lever support (100) and the other end of the tensioning drive (108) is connected with the pulling element.

7. Tensioning device for tensioning string sections (1) to a string with a pulling element, which runs between a counter support and an adapter on the rear end of the string, as well as a linear tensioning drive arranged parallel in relation to the pipe string for applying a tensioning force, **characterised by** a friction brake (20), which engages the pulling element (2) in a self locking manner in the operating position only in response to a pulling load applied by the tensioning drive (24, 108), so as to allow automatic movement of the tensioning device toward the pulling element, wherein the adapter is formed by a device according to any one of claims 1 to 6 for connecting a string section with the pulling element.

8. Tensioning device according to claim 7, **characterised in that** the linear tensioning drive (24, 108) Is supported between the tilt lever support and a locking sleeve (3) which is temporarily arranged on the pulling element.

9. Tensioning device according to claim 7 or 8, **characterised by** a counter support in the form of a drilling-, bursting- or expansion device for pulling in pipes.

10. Tensioning device according to any one of claims 7 to 9, **characterised in that** the rod elements (2) comprise one or a plurality of openings or protrusions for positive engagement with the locking sleeve (3) of the linear tensioning drive.

11. Tensioning device according to any one of claims 7 to 10, **characterised in that** the linear tensioning drive (24) comprises one or a plurality of pneumatically or hydraulically driven cylinders (5).

12. Tensioning device according to any one of claims 7 to 11, **characterised in that** the friction brake (20) comprises a clamping ring (21), which exercises a locking effect by virtue of its angular position.

13. Tensioning device according to any one of claims 7 to 12, **characterised in that** the friction brake (20) comprises a releasable actuating lever, which after unlocking allows the friction brake to move on the pulling element (2) in the direction out of the pipe (1) while automatically locking in the opposite direction.

14. Tensioning device according to any one of claims 7 to 13, **characterised in that** the locking effect of the clamping ring (21) can be deactivated by changing the angular position.

15. Method for tensioning string sections (1) to form a string comprising the steps of:
- attaching a pulling element to a counter support arranged at a front end of the string;
- threading one or a plurality of string sections (1) on the pulling element;
- and **characterised by** connecting a device for connecting a string section to a pulling element, which comprises a tilt lever support, at least one tilt lever, which is connected to the tilt lever support so as to enable the tilt lever to pivot about a pivot point, and in doing so a support section of the tilt lever, which is formed to support the tilt lever on the string section, is movable from a retracted position to an extended position, wherein the retracted position is provided closer to the centre axis of the device relative to the extended position, and a tensioning drive, so that the tilt lever is supported on the rear end of the last string section with its support section and the tensioning drive is supported on the pulling element by a support element;
- activating the tensioning drive, whereby the tilt lever support and the tilt lever move relative to the retaining element (6);
- activating the friction brake (20) and retracting the tensioning device from the string.

## Revendications

1. Dispositif pour relier un tronçon de ligne de tubes à un élément de traction qui traverse le tronçon de ligne, **caractérisé par**
- un support de levier basculant (100) réalisé de forme annulaire,
- au moins un levier basculant (102), qui est relié au support de levier basculant (100) de telle sorte que le levier basculant (102) peut basculer autour d'un point de basculement et qu'une partie de soutien (105) du levier basculant (102), conçue pour le soutien sur le tronçon de ligne, peut alors être déplacée d'une position rentrée dans une position déployée, la position rentrée étant prévue plus près de l'axe médian du dispositif que la position déployée,
- et une liaison pour relier le support de levier basculant (100) à l'élément de traction.

2. Dispositif selon la revendication 1, **caractérisé en ce que** la partie de soutien (105) du levier basculant (102) est formée à une extrémité du levier basculant (102) et présente une surface de soutien orientée perpendiculairement au plan de basculement dans lequel le levier basculant (102) est mobile.

3. Dispositif selon la revendication 2, **caractérisé en ce qu'**il est prévu plusieurs leviers basculants (102), et les surfaces de soutien de ces leviers basculants forment ensemble une surface annulaire au moins quasiment complète.

4. Dispositif selon l'une des revendications 1 à 3, **caractérisé en ce que** le levier basculant (102) est précontraint par des moyens élastiques en direction de la position déployée.

5. Dispositif selon l'une des revendications 1 à 4, **caractérisé par** une butée (107) qui limite le mouvement du levier basculant (102) en éloignement de la position rétractée à une position déployée maximale, par le contact d'une partie du levier basculant (102) avec la butée (107).

6. Dispositif selon l'une des revendications 1 à 5, **caractérisé par** un entraînement de tension (108) au moyen duquel le support de levier basculant (100) peut être relié à l'élément de traction, sachant que l'une des extrémités de l'entraînement de tension (108) est reliée au support de levier basculant (100) et que l'autre extrémité de l'entraînement de tension (108) peut être reliée à l'élément de traction.

7. Dispositif tendeur pour assembler par tension des tronçons (1) de ligne pour former une ligne de tubes, avec un élément de traction qui s'étend entre une butée et un adaptateur à l'extrémité arrière de la ligne de tubes, et avec un entraînement de tension linéaire disposé parallèlement à la ligne de tubes et destiné à exercer une force de tension, **caractérisé par** un frein à friction (20) qui, en position de fonctionnement, agit de manière autobloquante sur l'élément de traction (2) uniquement lors d'une sollicitation en traction par l'entraînement de tension (24, 108), afin de permettre un déplacement automatique du dispositif tendeur en direction de l'élément de traction, sachant que l'adaptateur est formé par un dispositif pour relier un tronçon de ligne de tubes à l'élément de traction selon l'une des revendications 1 à 6.

8. Dispositif tendeur selon la revendication 7, **caractérisé en ce que** l'entraînement de tension linéaire (24, 108) s'appuie entre le support de levier basculant et une douille de blocage (3) fixée temporairement sur l'élément de traction.

9. Dispositif tendeur selon la revendication 7 ou 8, **caractérisé par** une butée sous la forme d'un dispositif de forage, d'éclatement ou d'élargissement pour l'introduction de tubes.

10. Dispositif tendeur selon l'une des revendications 7 à 9, **caractérisé en ce que** des éléments de tringlerie (2) présentent une ou plusieurs ouvertures ou bossages pour l'assemblage par complémentarité de forme avec la douille de blocage (3) de l'entraînement de tension linéaire.

11. Dispositif tendeur selon l'une des revendications 7 à 10, **caractérisé en ce que** l'entraînement de tension linéaire (24) présente un ou plusieurs vérins (5) à entraînement pneumatique ou hydraulique.

12. Dispositif tendeur selon l'une des revendications 7 à 11, **caractérisé en ce que** le frein à friction (20) présente une bague de serrage (21) qui exerce une action de blocage par sa position angulaire.

13. Dispositif tendeur selon l'une des revendications 7 à 12, **caractérisé en ce que** le frein à friction (20) présente un levier d'actionnement déverrouillable qui, à la suite du déverrouillage, autorise un déplacement du frein à friction sur l'élément de traction (2) dans la direction de sortie du tube (1), et le bloque automatiquement dans la direction opposée.

14. Dispositif tendeur selon l'une des revendications 7 à 13, **caractérisé en ce que** l'action de blocage de la bague de serrage (21) peut être désactivée par modification de la position angulaire.

15. Procédé pour assembler par tension des tronçons (1) de ligne de tubes pour former une ligne de tubes, comprenant les étapes suivantes :
- fixation d'un élément de traction sur une butée, qui est disposée à une extrémité avant de la ligne de tubes ;
- enfilage d'un ou plusieurs des tronçons (1) de ligne de tubes sur l'élément de
traction ;
**caractérisé par** les étapes suivantes :
- mise en place d'un dispositif pour relier un tronçon de ligne de tubes à un élément de traction, dispositif qui comprend un support de levier basculant,
au moins un levier basculant, qui est relié au support de levier basculant de telle sorte que le levier basculant peut basculer autour d'un point de basculement et qu'une partie de soutien du levier basculant, conçue pour le soutien sur le tronçon de ligne, peut alors être déplacée d'une position rentrée dans une position déployée, la position rentrée étant prévue plus prés de l'axe médian du dispositif que la position déployée,
et un entraînement de tension, de sorte que le levier basculant s'appuie par une partie de soutien contre l'extrémité arrière du dernier tronçon de ligne de tubes et que l'entraînement de tension s'appuie contre l'élément de traction par l'intermédiaire d'un élément de maintien ;
- activation de l'entraînement de tension, de sorte que le support de levier basculant et le levier basculant sont déplacés par rapport à l'élément de maintien (6) ;
- activation du frein à friction (20) et sortie du dispositif tendeur hors de la ligne de tubes.
